(19) **Europäisches Patentamt**

**European Patent Office**

**Office européen des brevets**

(11) **EP 1 154 916 B1**

(12) **EUROPÄISCHE PATENTSCHRIFT**

(45) Veröffentlichungstag und Bekanntmachung des Hinweises auf die Patenterteilung:
**21.08.2002   Patentblatt 2002/34**

(21) Anmeldenummer: **00916765.1**

(22) Anmeldetag: **25.02.2000**

(51) Int Cl.⁷: **B60R 21/00**, G01S 17/02

(86) Internationale Anmeldenummer:
**PCT/DE00/00541**

(87) Internationale Veröffentlichungsnummer:
**WO 00/050265 (31.08.2000 Gazette 2000/35)**

(54) **VORRICHTUNG UND VERFAHREN ZUM OPTISCHEN ERFASSEN EINES OBJEKTES ODER EINER PERSON IM INNENRAUM EINES FAHRZEUGS**

DEVICE AND METHOD FOR OPTICALLY DETECTING AN OBJECT OR A PERSON IN THE PASSENGER COMPARTMENT OF A VEHICLE

DISPOSITIF ET PROCEDE DE DETECTION OPTIQUE D'UN OBJET OU D'UNE PERSONNE A L'INTERIEUR D'UN VEHICULE AUTOMOBILE

(84) Benannte Vertragsstaaten:
**DE FR GB IT**

(30) Priorität: **25.02.1999   DE 19908215**

(43) Veröffentlichungstag der Anmeldung:
**21.11.2001   Patentblatt 2001/47**

(73) Patentinhaber: **SIEMENS AKTIENGESELLSCHAFT**
**80333 München (DE)**

(72) Erfinder:
• **ROTH, Christoph**
**Shinagawa-ku, Tokyo 141-8641 (JP)**

• **WALDMANN, Alexander**
**D-93059 Regensburg (DE)**
• **HAMPERL, Reinhard**
**D-93096 Köfering (DE)**
• **STIERLE, Thomas**
**D-93059 Regensburg (DE)**
• **RÖSL, Reinhard**
**D-93173 Wenzenbach (DE)**
• **MADER, Gerhard**
**D-93107 Thalmassing (DE)**

(56) Entgegenhaltungen:
EP-A- 0 669 227          WO-A-94/22693
WO-A-99/14087          WO-A-99/34235
DE-A- 19 757 595       US-A- 5 737 083

**Beschreibung**

Die Erfindung betrifft eine Vorrichtung zum optischen Erfassen eines Objektes oder einer Person im Innenraum eines Fahrzeugs sowie ein Verfahren zum optischen Erfassen eines Objektes oder einer Person im Innenraum eines Fahrzeugs.

Weit in Richtung Armaturenbrett vorverlagerte Personen wie auch Kinder in sogenannten Reboard-Kindersitzen auf dem Beifahrersitz sind während des Fahrzeugbetriebes eines mit Airbag versehenen Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit verminderter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt.

Eine Vorrichtung zum berührungslosen Erkennen eines Objektes oder einer Person im Innenraum eines Fahrzeugs ist aus der EP 0 669 227 A1 bekannt. Dabei wird der Fahrzeugsitz durch eine Anzahl von Leuchtdioden mit Infrarotlicht bestrahlt. Vom Sitz bzw. einer Person oder einem Objekt auf dem Fahrzeugsitz reflektierte Strahlen werden durch ein Fotodetektorfeld aufgenommen.

Bei dem Einsatz einer solchen Vorrichtung im Fahrzeuginnenraum stellt Hintergrundlicht eine Störgröße dar. Der Empfänger der Vorrichtung nimmt nicht nur die emittierte und an einem Objekt gestreute Infrarotlichtstrahlung auf sondern auch durch Hintergrundlicht verursachte. Diese Störstrahlung kann den als Nutzsignal empfangenen Lichtpuls überlagern und die Auflösungsempfindlichkeit erheblich verringern.

Die WO 94/22693 A1, die als nächstkommender vorveröffentlichter Stand der Technik zu betrachten ist, zeigt und beschreibt eine Vorrichtung zum optischen Erfassen eines Objektes oder einer Person im Innenraum eines Fahrzeugs, mit einem Sender zum Aussenden einer optischen Pulsfolge, mit einem Empfänger zum Empfangen der an einem Objekt oder an einer Person gestreuten optischen Pulse und zum Wandeln der empfangenen optischen Pulse in ein elektrisches Signal. Zum Ausblenden eines durch Hintergrundlicht hervorgerufenen Anteils im elektrischen Signal sind elektrische Schaltungsmittel vorgesehen.

Die druckschriftlich nicht vorveröffentlichte WO 99/14087 A1 (Stand der Technik nach Artikel 54 (3) EPÜ) zeigen und beschreiben jeweils eine Vorrichtung, mit der Objekte (Wassertropfen) auf einer Scheibe festgestellt werden können. Hierzu wird mittels eines Senders eine optische Impulsfolge ausgesandt (in die Scheibe eingekoppelt) und mittels eines optischen Empfängers im Strahlengang (das aus der Scheibe ausgekoppelte) Licht empfangen (dabei wird der Lichtstrahl innerhalb der Scheibe an der inneren Grenzfläche der Scheibe totalreflektiert, wenn die Scheibe trocken bzw. sauber ist, beziehungsweise gebrochen, wenn die Scheibe naß ist) und in elektrische Signale gewandelt. Ferner sind Schaltungsmittel vorgesehen, mittels denen ein durch Hintergrundlicht hervorgerufener Anteil aus dem elektrischen Signal ausgeblendet werden kann. Hierzu wird ein steuerbarer Widerstand (MOSFET) im Empfängerkreis vorgesehen, der durch Regelung den durch Hintergrundlicht hervorgerufenen Anteil im Meßsignal weitgehend kompensiert.

Aufgabe der Erfindung ist es deshalb, eine Vorrichtung und ein Verfahren zum optischen Erfassen einer Person oder eines Objektes im Innenraum eines Fahrzeugs bereitzustellen, die eine durch das Hintergrundlicht im Fahrzeug verursachte Signalverfälschung eines erfaßten optischen Signals entkräften.

Der die Vorrichtung betreffende Teil der Erfindungsaufgabe wird durch die Merkmale des Patentanspruchs 1 gelöst. Der das Verfahren betreffende Teil der Erfindungsaufgabe wird durch die Merkmale des Patentanspruchs 7 gelöst.

Vorteilhafte Weiterbildungen der Erfindung sind durch die Unteransprüche gekennzeichnet.

Die Zeichnung zeigt Ausführungsbeispiele der Erfindung und ihrer Weiterbildungen. Es zeigen im einzelnen:

Figur 1     einen Querschnitt durch eine Fahrgastzelle,
Figur 2     den Frequenzgang eines optischen Filters,
Figur 3     Signalverläufe über der Zeit,
Figur 4     einen weiteren Schaltplan einer erfindungsgemäßen Vorrichtung.

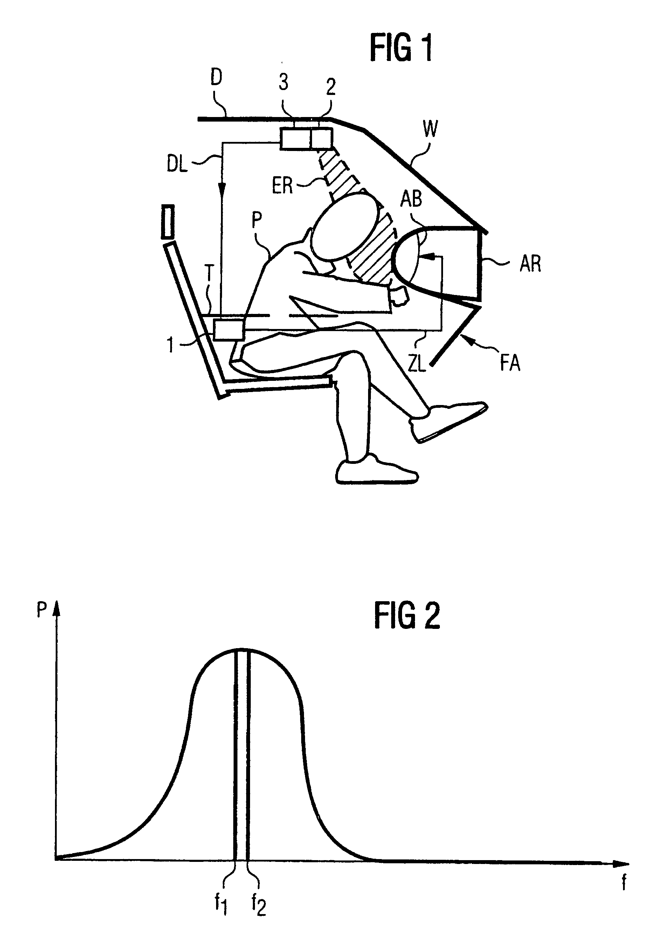

Figur 1 zeigt einen Querschnitt der vorderen Fahrgastzelle, beifahrerseitig, wobei alle Elemente symbolisch eingezeichnet sind. Dabei ist der Fahrzeuginnenraum durch ein Dach D, eine Windschutzscheibe W, ein Armaturenbrett AR und ein Fußablage FA begrenzt. Zur Abgrenzung des Fahrzeuginnenraums muß jedoch nicht notwendigerweise das Dach D und damit eine geschlossene Fahrgastzelle vorhanden sein. Es ist ein Fahrzeugsitz S ersichtlich, auf dem eine Person P in vorverlagerter Oberkörperposition sitzt. Am Dach D ist ein optisches Erfassungsmittel 2 zum Erfassen eines Objektes oder einer Person angeordnet. Das optische Erfassungsmittel 2 weist einen eingezeichneten Wirkungsbereich ER auf. Das Armaturenbrett AR enthält ein Beifahrerairbagmodul AB im zusammengefalteten Zustand. In entfaltetem Zustand schießt der Beifahrerairbag in Richtung Kopf der eingezeichneten Person P. Es ist ersichtlich, daß mit dem optischen Erfassungsmittel 2 der Gefahrenbereich vor einem zusammengefalteten Airbagmodul AB in Aufblasrichtung überwacht werden soll. Wird ein Insasse oder ein Kindersitz in diesem Wirkungsbereich ER erkannt, so wird ein Auslösen des Beifahrerairbagmoduls AB verhindert oder geeignet dosiert. Das optische Erfassungsmittel 2 kann auch auf den Fahrzeugsitz S gerichtet sein und eine Abweichung einer Person aus seiner normalen Sitzposition erfassen. Es sind auch Erfassungsmittel vorstellbar, die den gesamten vorderen Fahrzeuginnenraum mit einer Mehrzahl von Sensoren abtasten und jegliche Arten von Objekt- oder Personenpositionen aufnehmen können. Die Erfindung ist also nicht beschränkt auf das konkrete Erfassen eines Abbildes eines Objektes oder einer Person sondern insbesondere auch ausgebildet zur Überwachung eines bestimmten Bereiches oder einer bestimmten Zone im Fahrzeuginnenraum auf das Vorhandensein eines Objektes oder einer Person. Die Vorrichtung ist dabei insbesondere zur berührungslosen Erfassung ausgebildet.

Der Sensor der Vorrichtung tastet seinen Wirkungsbereich mittels optischer Strahlung, insbesondere infraroter Strahlung ab. Es sind aber auch Strahlungen mit anderen Wellenlängen anwendbar. Der Sensor enthält dabei ein Leuchtdiode, insbesondere einen Infrarotsender in Form einer Laserdiode, der eine oder mehrere Strahlen oder Strahlungsvorhänge aussendet. Der Sensor enthält ferner ein oder mehrere optische Empfangselemente in Form von Fotozellen, die die an einem Objekt oder einer Person reflektierte oder gestreute Strahlung aufnehmen. Durch Auswertung der gestreuten Strahlung kann der Abstand zwischen dem Sensor und dem Objekt sowie gegebenenfalls eine Konturierung und genaue Positionsbestimmung im zwei- oder dreidimensionalen Raum bestimmt werden.

Das optische Erfassungsmittel 2 ist mit einem Auswerter 3 in einem gemeinsamen Gehäuse angeordnet. Der Auswerter 3 dient zur Ansteuerung der optischen Sendeelemente sowie zum Auswerten von über die Fotozellen empfangenen Signalen.

Am Fahrzeugtunnel T ist eine Insassenschutz-Steuereinrichtung 1 angeordnet, die über Zündleitungen ZL das Airbagmodul AB ansteuern und damit auslösen kann. Eine Datenleitung DL verbindet den dem optischen Erfassungsmittel 2 zugeordneten Auswerter 3 mit der Insassenschutz-Steuereinrichtung 1. Das Airbagmodul AB ist vorzugsweise mehrstufig oder kontinuierlich in seiner Füllmenge durch die Insassenschutz-Steuereinrichtung 1 füllbar. Der Auswerter 3 liefert dabei vorzugsweise in codierter Signalform Information an die Insassenschutz-Steuereinrichtung 1 dahingehend, welches Maß an Airbagfüllung angesichts der ermittelten Insassen- oder Objektposition bei einem Aufprall als gerechtfertigt erscheint. Erkennt die Insassenschutz-Steuereinrichtung 1 unter Zuhilfenahme einer angebundenen Aufprallsensorik einen zum Auslösen des Airbagmoduls AB ausreichend starken Aufprall, so wird unter Berücksichtigung der vom Auswerter 3 gelieferten Information das Airbagmodul AB über die Zündleitung ZL in dem dafür vorgesehenen Maß ausgelöst.

Zum Erfassen einer Person oder eines Insassen durch das optische Erfassungsmittel 2 werden vorzugsweise ein oder mehrere Sendeelemente des optischen Erfassungsmittels 2 gepulst betrieben. Nach dem Aussenden eines Lichtpulses wird der an einem Objekt oder an einer Person gestreute Lichtpuls aufgenommen und durch Zuhilfenahme einer Laufzeituntersuchung oder im Triangulationsverfahren der Abstand zwischen dem optischen Erfassungsmittel 2 und dem Objekt berechnet. In Abhängigkeit der Anzahl der Sende- und Empfangsmittel kann ein dreidimensionales Bild aus dem Wirkungsbereich ER aufgenommen werden. Zum Erfassen eines weiteren Bildes wird im folgenden ein weiterer optischer Puls ausgesendet. Zum zeitlichen Abtasten wird daher eine optische Pulsfolge vorzugsweise mit einem Abstand von 100 bis 500 Millisekunden zwischen dem optischen Pulsen des Erfassungsmittels ausgesendet. Die Pulsfolge und damit die Abtastrate ist vorzugsweise erhöht, wenn der Beginn eines Aufpralls beispielsweise durch das Überschreiten eines vorgegebenen Verzögerungswertes erkannt wird.

Dem optischen Empfänger vorgeschaltet ist vorzugsweise ein optischer Bandpaß mit einem in Figur 2 gezeigten Frequenzgang P über der Frequenz f. Dabei emittiert der Sender des optischen Erfassungsmittels 2 Licht mit einer Frequenz f1<f<f2. Wird ein Laser als Sender verwendet, so wird monochromes Licht ausgesendet. Der optische Bandpaß entfernt weitgehend Spektralanteile größer oder kleiner der Lichtfrequenz des ausgesendeten Lichtes.

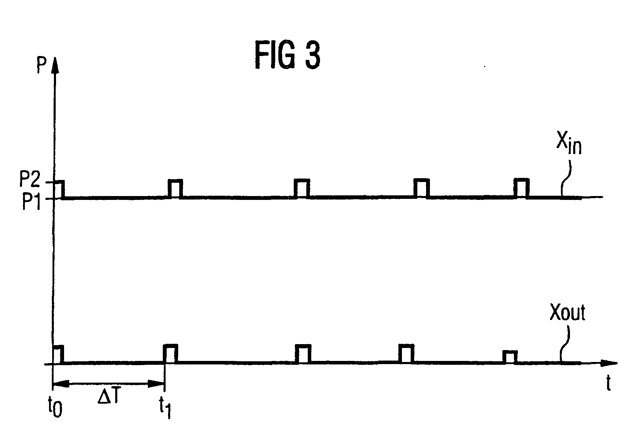

Figur 3 zeigt ein von einem Fotoelement aufgenommenes und gewandeltes elektrisches Signal $X_{in}$ über der Zeit t unter Berücksichtigung eines dem Fotoelement vorgeschalteten optischen Bandpasses mit einem Frequenzgang nach Figur 2. Das elektrische Signal $X_{IN}$ ist gekennzeichnet durch einen hochpegeligen Gleichsignalanteil P1 und einen niederpegeligen Nutzsignalanteil P2 - P1, der als Pulssignal eine Frequenz von $\frac{1}{\Delta T}$ aufweist. Die Frequenz $\frac{1}{\Delta T}$ kennzeichnet die Pulsfrequenz, mit der der Sendelaser betrieben wird und mit der die zu erfassende Person oder das zu erfassende Objekt abgetastet wird. Der Gleichanteil P1 im Signal $X_{in}$ ist dabei unweigerlich mitaufgenommenes Hintergrundlicht im vom optischen Bandpaß freigegebenen Frequenzspektrum zurückzuführen. Dieses Hintergrundlich ist beispielsweise Sonnenlicht oder auch künstliches Licht mit entsprechenden Frequenzanteilen. So kann zwar durch die Verwendung des optischen Bandpasses Hintergrundlicht mit von der Lichtfrequenz des Sendelasers abweichenden Frequenzen weitgehend herausgefiltert werden. Licht mit einer Wellenlänge im Bereich der Laserwellenlänge wird jedoch trotz der Verwendung eines optischen Bandpasses von dem Fotoempfänger aufgenommen und dem eigentlichen Nutzpuls überlagert. Dabei spiegelt das Signal $X_{in}$ die Größenverhältnisse zwischen dem durch das Hintergrundlicht hervorgerufenen Störanteil P1 im elektrischen Signal $X_{in}$ und dem gepulsten Nutzsignal P2 - P1 wieder.

Erfindungsgemäß ist nun ein elektrisches Schaltungsmittel vorgesehen, das den durch das Hintergrundlicht hervorgerufenen Anteil P1 im elektrischen Signal $X_{in}$ zumindest weitgehend ausblendet und idea-

lerweise ein elektrisches Ausgangssignal $X_{out}$ gemäß Figur 3 liefert, das keinen durch das Hintergrundlicht verursachten Anteil P1 innehat. Ein solches Signal $X_{out}$ kann nun beliebig verstärkt werden, ohne daß Nutzsignalanteile geschwächt oder durch den Betrieb des Verstärkers im Sättigungsbereich gar verlorengehen. Die erfindungsgemäße Vorrichtung erzeugt damit ein aussagekräftiges und ausreichend aufgelöstes elektrisches Signal.

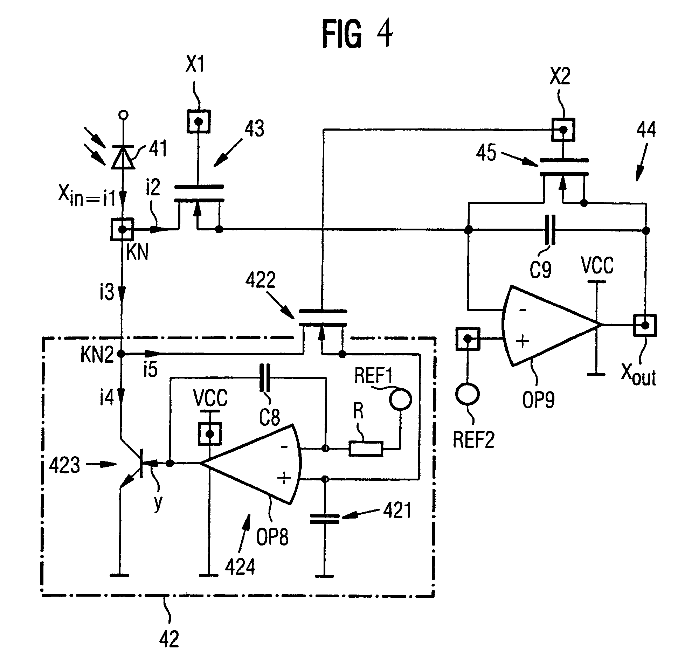

Die Schaltungsanordnung gemäß Figur 4 ist vorzugsweise Bestandteil des Auswerters 3 gemäß Figur 1. Der Schaltungsanordnung gemäß Figur nachgeschaltet ist vorzugsweise ein Mikroprozessor zur Durchführung weiterer Auswertungsschritte.

Figur 4 zeigt ein Schaltbild eines Ausführungsbeispiels der erfindungsgemäßen Vorrichtung. Ein als Fotozelle ausgebildeter optischer Empfänger 41 liefert das elektrische Signal $X_{in}$ in Form eines Stromes i1. Der Strom i1 fließt in einen Schaltungs-Knotenpunkt KN und zweigt sich dort auf, wobei ein Strompfad über einen steuerbaren Schalter 43 zu einem Auswerter 44 führt. Der zweite Strompfad führt von dem Schaltungs-Knotenpunkt KN aus zu einem Regelkreis 42.

Der steuerbare Schalter 43 wird über ein Steuersignal X1 sperrend oder leitend geschaltet. Der Schalter 44 enthält ein Integratorglied mit den Bauelementen Operationsverstärker OP9 und Kapazität C9. Am Operationsverstärker OP9 liegt eine Referenzspannung REF2 an. Am Ausgang des Operationsverstärkers ist das Ausgangssignal $X_{out}$ abgreifbar. Der Integrator kann mit Hilfe eines weiteren steuerbaren Schalters 45 überbrückt werden. Ein Steuersignal X2 schaltet den weiteren steuerbaren Schalter 45, der im übrigen wie alle steuerbaren Schalter der Schaltungsanordnung als Feldeffekttransistor ausgebildet ist, leitend oder sperrend.

Der Regelkreis 42 enthält eine Stromsenke 423, die mit dem Schaltungsknotenpunkt KN verbunden ist. Aus dem Schaltungsknotenpunkt KN, der den Strom i3 liefert wird ein Strom i5 zur Regelung eines Steuersignals y der Stromsenke 423 abgezweigt. Ein Strom i4 durchfließt die als Bipolar-Transistor ausgebildete Stromsenke 423. Der Schaltungs-Knotenpunkt KN ist über einen ebenfalls durch das Steuersignal X2 betätigbaren steuerbaren Schalter 422 mit einem Vergleicher 424 verbunden. Der Vergleicher enthält einen Operationsverstärker OP8 sowie eine Kapazität C8. An den Eingängen des Vergleichers liegt das Stromsignal i5 sowie das Referenzsignal REF1 an. Der Regeleingang des Vergleichers 424 ist ferner mit einem Speicherelement 421 in Form eines Kondensators verbunden. Der Ausgang des Vergleichers 424 liefert das Steuersignal y für die Stromsenke 423.

Im folgenden wird die Funktionsweise der erfindungsgemäßen Schaltung beschrieben:

Dabei sei zunächst davon ausgegangen, daß der nicht eingezeichneten Sender des optischen Erfassungssystems zunächst keinen Laserpuls aussendet.

Damit nimmt der optische Empfänger lediglich Hintergrundlicht auf. Das elektrische Signal $X_{IN}$ = i1 liefert deshalb ausschließlich einen durch Hintergrundlicht hervorgerufene Gleichanteil P1 gemäß Figur 2 bei im Betrachtungszeitraum mit konstanter Lichtstärke angenommenem Hintergrundlicht. Für den Fall, daß kein Lichtpuls ausgesendet und damit auch kein an einem Objekt gestreuter Lichtpuls durch den Empfänger 41 aufgenommen werden kann, wird mit dem Steuersignal X1 der steuerbare Schalter 43 sperrend geschaltet, so daß die Auswerteeinheit 44 vom optischen Empfänger 41 abgekoppelt ist (i2 = 0); (i3 = i1). Der dem Regelkreis 42 und insbesondere der Stromsenke 423 zugeführte Strom i3 ist also gleich dem gesamten von dem optischen Empfänger 41 gelieferten Strom i1 und ausschließlich auf Hintergrundlicht zurückzuführen. Im folgenden sei zunächst angenommen, daß das Steuersignal y der Stromsenke 423 derart bemessen ist, daß genau der von dem Empfänger 41 aufgrund des Hintergrundlichtes erzeugte Strom i1 vollständig von der Stromsenke 423 aufgenommen wird (i4 = i3 = i1). In diesem Fall beträgt der abgezweigte Strom zum Regeln der Steuergröße y: i5 = 0.

Mit dem Aussenden eines Laserpulses durch den optischen Sender wird nun durch einen Flankenanstieg oder einen Pegelwechsel im Steuersignal X1 der steuerbare Schalter 43 leitend geschaltet und damit der Auswerter 44 mit dem Empfänger 41 verbunden. Im folgenden wird nun zusätzlich zu dem latent vorhandenen Hintergrundsignal ein an einem Objekt gestreuter Puls aufgenommen. Aufgrund der Einstellung der Stromsenke 423 fließt nach wie vor exakt der alleine auf dem Hintergrundlicht beruhende Gleichanteil P1 als Strom i3 = i4 durch die Stromsenke 423. Ein Signalhub im elektrischen Signal i1 (= P2 - P1 nach Figur 3), hervorgerufen durch den gestreuten optischen Puls, kann von der Stromsenke 423 nicht mehr aufgenommen werden. Dieser Signalhub fließt nun in Form des Stromes i2 über den steuerbaren Schalter 43 zum Auswerter 44 und wird dort integriert. Dabei wird zumindest mit dem Aussenden des Lichtpulses das Steuersignal X2 derart geschaltet, daß die Überbrückung des Auswerters 44 in Form des steuerbaren Schalters 45 sperrend geschaltet wird und daraufhin das dem Auswerter 44 zugeführte Signal I2 aufintegriert wird zum Ausgangssignal $X_{out}$.

Auf diese Art und Weise wird beim Ausblenden des durch Hintergrundlicht hervorgerufenen Anteils I3 aus dem von dem Empfänger 41 gelieferten Signal i1 erreicht, so daß lediglich ein als Nutzsignal i2 ein empfangener Puls bzw. mehrere empfangene Pulse ohne additiven Gleichanteil dem Auswerter 44 zugeführt und dort verarbeitet werden. Das Ausgangssignal $X_{out}$ wird vorzugsweise einem Mikroprozessor zur weiteren Auswertung zugeführt.

Das Hintergrundlicht kann bei einem optischen System im Fahrzeug nur in den seltensten Fällen als konstant angenommen werden. Das Hintergrundlicht ist bei je nach Tages- oder Nachtzeit, zu der das Fahrzeug betrieben wird unterschiedlich ausgeprägt sowie abhängig von jeder Lichtänderung im Umfeld des betriebenen Fahrzeugs. Im folgenden sei zunächst wiederum kein Sendepuls durch den Sender abgestrahlt und somit der steuerbare Schalter 43 sperrend geschaltet. Aufgrund einer Änderung der Lichtstärke des Hintergrundlichtes sei nun der dem Regelkreis 42 zugeführte Strom i3 größer als noch wenige Millisekunden zuvor. Die Stromsenke 423 ist aufgrund des Steuersignals y jedoch nur zur Aufnahme eines Stromes i4 vorbestimmter Stärke ausgebildet, der nun kleiner ist als der dem Regelkreis 42 zugeführte Strom i3. Das Differenzsignal i5 als Differenzstromstärke i3 - i4 kann deshalb nicht mehr von der Stromsenke 423 aufgenommen werden und wird über den leitend geschalteten steuerbaren Schalter 422 dem Vergleicher 424 zugeführt. Das Referenzsignal REF1 am Eingang des Vergleichers sei vorzugsweise derart ausgebildet, daß die Regelgröße i5 auf Null geregelt wird. Im vorbeschriebenen Beispiel wird also aufgrund einer Erhöhung der Hintergrundlichtintensität ein positives Signal i5 dem Vergleicher 424 zugeführt, so daß im folgenden das Steuersignal y für die Stromsenke 423 derart verändert wird, daß ein größerer Strom i4 als bisher von der Stromsenke 423 aufgenommen werden kann. Ziel des Regelkreises 42 ist es daher, daß jederzeit der Hintergrundlichtanteil im elektrischen Signal des Empfängers vollständig über die Stromsenke 423 abfließt. Das Einschwingverhalten des Regelkreises 42 sollte dabei nur eine geringe Totzeit aufweisen.

Mittels des steuerbaren Schalters 422 kann vermieden werden, daß ein dem Hintergrundlicht überlagerter Nutzimpuls, der durch den Auswerter 44 im folgenden ausgewertet werden soll, als Änderung des Hintergrundlichtanteils im Signal verstanden und damit ausgeregelt wird. Aufgrund dessen wird mit dem Aussenden eines optischen Impulses durch das System der Regelkreis 42 über den steuerbaren Schalter 422 unterbrochen. Diese Unterbrechung hat zur Folge, daß das unmittelbar zuvor an der Stromsenke 423 anliegende steuerbare Signal y eingefroren wird. Das Speicherelement 421 in Form des mit dem Vergleichers 424 verbundenen Kondensators sorgt dafür, daß am Eingang des Vergleichers 424 die unmittelbar vor dem Abschalten des steuerbaren Schalters 422 anstehende Steuerspannung weiterhin anliegt. Während also ein durch Streuung aufgenommener Puls durch den Auswerter 44 ausgewertet wird, ist die aktive Regelung der Stromsenke unterbrochen und quasi statisch eingefroren. Mit Ende der Auswertung des Pulses wird durch das Steuersignal X2 sowohl der steuerbare Schalter 422 wie auch der steuerbare Schalter 454 leitend geschaltet, so daß der als Integrator ausgebildete Auswerter 44 kurzgeschlossen ist und eine Regelung des Hintergrundlichtes wieder aktiviert ist. Gleichzeitig wird durch das Steuersignal X1 der steuerbare Schalter 43 sperrend geschaltet, so daß der Auswerter 44 von dem Empfänger 41 abgetrennt.

Vorzugsweise ist also das Steuersignal X2 zum Steuersignal X1 invertiert ausgebildet, binäre Signale vorausgesetzt. Das Steuersignal X1 zum Durchschalten des Schalters 43 wird vorzugsweise gemeinsam mit dem Sendesignal für den optischen Sender gesetzt. Alternativ könnte der Schalter 43 noch für eine minimale Zeitspanne nach dem Aussenden eines Sendepulses leitend geschaltet werden. Dieser Zeitversatz kann in Folge der Laufzeit der optischen Pulse gewährt werden. Es muß in jedem Fall sichergestellt werden, daß der Schalter 43 leitend geschaltet und damit der Schalter 422 sperrend geschaltet ist, sobald das Empfangen eines optischen Pulses durch den Empfänger erwartet werden kann.

Grundsätzlich folgt die Betriebsweise der aus der Figur 4 hervorgehenden elektrischen Schaltung im wesentlichen folgenden Verfahrensschritten: Zunächst wird eine Hintergrundlichtmessung ohne zu erwartendes Nutzsignal durchgeführt. Im folgenden wird ein Nutzsignal inklusive Hintergrundlichtanteil aufgenommen. Von diesem Nutzsignal wird der zuvor ermittelte Hintergrundlichtsignalanteil durch Filterung, Differenzbildung etc. abgezweigt, so daß lediglich das eigentliche Nutzsignal der weiteren Ausführung zugrunde geführt wird. Diese Verfahrensschritte können auch von einem softwaregesteuerten Mikrorechner durchgeführt werden.

## Patentansprüche

1. Vorrichtung zum optischen Erfassen eines Objektes oder einer Person im Innenraum eines Fahrzeugs,

   - mit einem Sender zum Aussenden einer optischen Pulsfolge,
   - mit einem Empfänger (31) zum Empfangen der an einem Objekt oder an einer Person gestreuten optischen Pulse und zum Wandeln der empfangenen optischen Pulse in ein elektrisches Signal ($X_{in}$),
   - wobei elektrische Schaltungsmittel vorgesehen sind zum Ausblenden eines durch Hintergrundlicht hervorgerufenen Anteils (P1) im elektrischen Signal ($X_{in}$),
   - wobei das elektrische Schaltungsmittel eine Stromsenke (423) zur Aufnahme des durch Hintergrundlicht hervorgerufenen Anteils (P1) im elektrischen Signal ($X_{in}$) aufweist, und
   - wobei die Stromsenke (423) regelbar ausgebildet ist zum Aufnehmen des durch Hintergrundlicht hervorgerufenen Anteils (P1) im elektrischen Signal ($X_{in}$) auch bei sich zeitlich änderndem Hintergrundlichtanteil (P1).

2. Vorrichtung nach Anspruch 1, **dadurch gekennzeichnet, daß** als Regelgröße die Signaldifferenz (i5) zwischen dem der Stromsenke (423) zugeführten Signal (i3) und dem von der Stromsenke (423) aufgenommenen Signal (i4) verwendet wird.

3. Vorrichtung nach Anspruch 1 oder 2, **dadurch gekennzeichnet, daß** der Regelkreis (42) einen steuerbaren Schalter (422) aufweist zum Auftrennen des Regelkreises (42) und ein Speicherelement (421) zum Ausgeben einer Steuergröße (y) für die Stromsenke nach dem Auftrennen des Regelkreises.

4. Vorrichtung nach Anspruch 3, **dadurch gekennzeichnet, daß** das Speicherelement (421) zum Ausgeben der unmittelbar vor dem Auftrennen des Regelkreises (42) an der Stromsenke (421) anliegenden Steuergröße (y) ausgebildet ist.

5. Vorrichtung nach einem der Ansprüche 1 bis 4, **dadurch gekennzeichnet, daß** der Empfänger (41) über einen Schaltungs-Knotenpunkt (KN) mit der Stromsenke (423) und mit einem Auswerter (44) verbunden ist.

6. Vorrichtung nach Anspruch 5, **dadurch gekennzeichnet, daß** der Schaltungs-Knotenpunkt (KN) über einen steuerbaren Schalter (43) mit den Auswerter (44) verbunden ist zum Zuschalten des Auswerters (44) bei oder nach einem Abschalten der Stromsenkenregelung (42).

7. Verfahren zum optischen Erfassen eines Objektes oder einer Person im Innenraum eines Fahrzeugs,

   - bei dem optische Pulse ausgesendet werden,
   - bei dem die an einem Objekt oder an einer Person gestreuten optischen Pulse aufgenommen und in ein elektrisches Signal ($X_{in}$) gewandelt werden,

   wobei ein durch Hintergrundlicht hervorgerufener Anteil (P1) im elektrischen Signal ($X_{in}$) ausgeblendet wird, indem

   - der durch das Hintergrundlicht hervorgerufene Anteil (P1) im elektrischen Signal (Xin) in einer regelbaren Stromsenke aufgenommen wird.

8. Verfahren nach Anspruch 7,

   - bei dem Hintergrundlicht ohne das Vorliegen eines gestreuten optischen Pulses aufgenommen wird,
   - bei dem ein gestreuter optischer Puls aufgenommen und in ein elektrisches Signal ($X_{in}$) mit einem durch Hintergrundlicht hervorgerufenen Anteil (P1) gewandelt wird,
   - bei dem von dem elektrischen Signal ($X_{in}$) der

zuvor eigenständig ermittelte, auf das Hintergrundlicht zurückzuführende Anteil (P1) abgezogen wird, und

   - bei dem der verbleibende Signalanteil (P2-P1) als Nutzsignal einer Auswertung unterzogen wird.

## Claims

1. Device for the optical detection of an object or person inside a vehicle,

   - with a transmitter to transmit an optical impulse sequence,

   - with a receiver (31) to receive the optical impulses dispersed off an object or person and to convert the optical impulses received into an electrical signal ($X_{in}$),

   - with electrical circuit devices provided to mask a fraction (P1) produced by background light in the electrical signal ($X_{in}$),

   - with the electrical circuit device having a current sink (423) to register the fraction (P1) produced by the background light in the electrical signal ($X_{in}$) and

   - with the current sink (423) being programmed so that it can be regulated to receive the fraction (P1) produced by the background light in the electrical signal ($X_{in}$), even when the background light fraction (P1) changes over time.

2. Device according to Claim 1, **characterised in that** the signal difference (i5) between the signal (i3) fed to the current sink (423) and the signal (i4) registered by the current sink (423) is used as the regulating parameter.

3. Device according to Claim 1 or 2, **characterised in that** the control circuit (42) has a controllable switch (422) to interrupt the control circuit (42) and a memory element (421) to output a control parameter (y) for the current sink after the control circuit has been interrupted.

4. Device according to Claim 3, **characterised in that** the memory element (421) is designed to output the control parameter (y) present at the current sink (421) immediately before the control circuit (42) is interrupted.

5. Device according to one of Claims 1 to 4, **characterised in that** the receiver (41) is connected across a circuit node point (KN) to the current sink (423) and an evaluator (44).

6. Device according to Claim 5, **characterised in that** the circuit node point (KN) is connected across a controllable switch (43) to the evaluator (44) to connect the evaluator (44) during or after disconnection of the current sink regulator (42).

7. Method for optically detecting an object or person inside a vehicle,

    - in which optical impulses are transmitted,
    - in which the optical impulses dispersed off an object or a person are registered and converted into an electrical signal ($X_{in}$), with a fraction (P1) produced by background light in the electrical signal ($X_{in}$) being masked, when
    - the fraction (P1) produced by background light in the electrical signal ($X_{in}$) is registered in an adjustable current sink.

8. Method according to Claim 7,

    - in which background light is registered without the existence of a dispersed optical impulse,

    - in which a dispersed optical impulse is registered and converted into an electrical signal ($X_{in}$) with a fraction (P1) produced by background light,

    - in which the previously independently determined fraction (P1) due to background light is deducted from the electrical signal ($X_{in}$), and

    - in which the residual signal fraction (P2 - P1) is subjected to evaluation as a useful signal.

**Revendications**

1. Dispositif pour la détection optique d'un objet ou d'une personne dans le volume intérieur d'un véhicule, comprenant :

    - un émetteur destiné à émettre une succession d'impulsions optiques,
    - un récepteur (31) destiné à recevoir les impulsions optiques diffusées par un objet ou une personne et à convertir les impulsions optiques reçues en un signal électrique ($X_{in}$),
    - dans lequel il est prévu un circuit électrique destiné à éliminer une fraction (P1) du signal électrique ($X_{in}$) qui est engendrée par une lumière de fond,
    - dans lequel le circuit électrique présente un puits de courant (423) destiné à recevoir la fraction (P1) du signal électrique ($X_{in}$) qui est engendrée par une lumière de fond et

    - dans lequel le puits de courant (423) est réalisé de façon réglable pour absorber la fraction (P1) du signal électrique ($X_{in}$) qui est engendrée par la lumière de fond, même lorsque la fraction lumière de fond (P1) varie dans le temps.

2. Dispositif selon la revendication 1, **caractérisé en ce qu'**il utilise comme grandeur réglante la différence de signal (i5) entre le signal (i3) transmis au puits de courant (423) et le signal (i4) absorbé par le puits de courant (423).

3. Dispositif selon la revendication 1 ou 2, **caractérisé en ce que** le circuit de régulation (42) présente un interrupteur pouvant être commandé (422) destiné à séparer le circuit régulateur (42) et un élément de mémoire (421) destiné à émettre une grandeur de commande (y) pour le puits de courant après la séparation du circuit régulateur.

4. Dispositif selon la revendication 3, **caractérisé en ce que** l'élément de mémoire (421) est conçu pour émettre la grandeur de commande (y) qui est présente au puits de courant (421) immédiatement avant la séparation du circuit régulateur (42).

5. Dispositif selon une des revendications 1 à 4, **caractérisé en ce que** le récepteur (41) est relié au puits de courant (423) et à un analyseur (44) à travers un noeud de circuit (KN).

6. Dispositif selon la revendication 5, **caractérisé en ce que** le noeud de circuit (KN) est relié à l'analyseur (44) à travers un interrupteur (43) pouvant être commandé, pour mettre l'analyseur (44) en circuit au moment de la déconnexion de la régulation (42) du puits de courant, ou après cette déconnexion.

7. Procédé pour la détection optique d'un objet ou d'une personne dans le volume intérieur d'un véhicule,

    - dans lequel des impulsions optiques sont émises,
    - dans lequel les impulsions optiques diffusées par un objet ou une personne sont reçues et converties en un signal électrique ($X_{in}$), cependant qu'une fraction (P1) du signal électrique ($X_{in}$) engendrée par la lumière de fond est éliminée par le fait que
    - la fraction (P1) contenue dans le signal électrique ($X_{in}$) qui est engendrée par la lumière de fond est absorbée dans un puits de courant réglable.

8. Procédé selon la revendication 7,

- dans lequel la lumière de fond est absorbée sans la présence d'une impulsion optique diffusée,
- dans lequel une impulsion optique diffusée est reçue et transformée en un signal électrique ($X_{in}$) qui comprend une fraction (P1) engendrée par la lumière de fond,
- dans lequel la fraction (P1) à imputer à la lumière de fond, qui a été préalablement mesurée séparément, est éliminée du signal électrique ($X_{in}$), et
- dans lequel la fraction restante (P2 - P1) du signal est prise comme signal utile, et soumise à une analyse.

# FIG 1

# FIG 2

FIG 3

# FIG 4